(19) Europäisches Patentamt
European Patent Office
Office européen des brevets

(11) **EP 3 196 235 B1**

(12) **EUROPEAN PATENT SPECIFICATION**

(45) Date of publication and mention of the grant of the patent:
**17.02.2021 Bulletin 2021/07**

(51) Int Cl.:
*C08J 5/18* *(2006.01)*          *B32B 15/085* *(2006.01)*
*H01G 4/18* *(2006.01)*          *C08L 23/12* *(2006.01)*

(21) Application number: **15842047.1**

(22) Date of filing: **15.09.2015**

(86) International application number:
**PCT/JP2015/076092**

(87) International publication number:
**WO 2016/043172 (24.03.2016 Gazette 2016/12)**

(54) **POLYPROPYLENE FILM AND FILM CAPACITOR**

POLYPROPYLENFOLIE UND FILMKONDENSATOR

FILM DE POLYPROPYLÈNE ET CONDENSATEUR À FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2014 JP 2014191075**
**19.09.2014 JP 2014191078**

(43) Date of publication of application:
**26.07.2017 Bulletin 2017/30**

(73) Proprietor: **Toray Industries, Inc.**
**Tokyo 103-8666 (JP)**

(72) Inventors:
• **OKADA, Kazuma**
**Otsu-shi**
**Shiga 520-8558 (JP)**
• **OHKURA, Masatoshi**
**Otsu-shi**
**Shiga 520-8558 (JP)**
• **IMANISHI, Yasuyuki**
**Otsu-shi**
**Shiga 520-8558 (JP)**
• **KUMA, Takuya**
**Otsu-shi**
**Shiga 520-8558 (JP)**

(74) Representative: **Mewburn Ellis LLP**
**Aurora Building**
**Counterslip**
**Bristol BS1 6BX (GB)**

(56) References cited:
EP-A1- 1 398 344          EP-A1- 1 702 761
EP-A1- 2 415 791          EP-A1- 2 684 676
DE-T5-112008 002 985      JP-A- S6 088 049
JP-A- H05 128 915         JP-A- H08 323 856
JP-A- S59 191 207         JP-A- 2006 093 689
JP-A- 2006 093 689        JP-A- 2013 538 258
JP-A- 2014 194 010        JP-A- 2015 201 616

• DATABASE WPI Week 200447 Thomson Scientific, London, GB; AN 2004-491361 XP002779630, & JP 2004 161799 A (TORAY IND INC) 10 June 2004 (2004-06-10)

**Description**

TECHNICAL FIELD

The present invention relates to a polypropylene film suitable for packaging or industrial use, and more particularly relates to a polypropylene film which can maintain high voltage resistance and reliability even in an environment of high-temperature as a dielectric for capacitor, and suitable for capacitor applications.

BACKGROUND ART

Since a polypropylene film has high transparency, and excellent mechanical characteristics and electric characteristics, it is used in various applications such as packaging applications, tape applications, and electric applications including a cable lapping and a capacitor.

Among these applications, the capacitor application is particularly preferably used for a high-voltage capacitor including a DC application and an AC application because of excellent voltage resistance and a low loss characteristic.

Recently, various electric facilities are changed to the inverter, and it is increasingly required to reduce a size of a capacitor and increase a capacitance of a capacitor. From such a requirement of market, particularly automobile applications (including a hybrid car application) , solar energy generation, and wind force power generation, it becomes necessary that the voltage resistance of a polypropylene film is improved and thickness thereof is further reduced while maintaining productivity and processability.

Such a polypropylene film is required to increase the rigidity in a film plane from the viewpoint of voltage resistance, productivity, and processability, and it is particularly important to increase the rigidity in a film plane for improving the voltage resistance. From the viewpoint of heat resistance, it is said that a temperature of operation environment exceeds 120°C in the future in consideration of power semiconductor applications using a SiC. From requirement of further enhancing heat resistance and voltage resistance as a capacitor, it is required to increase the rigidity of a film at a high temperature of 125°C. However, as described in Non-patent Document 1, it is said that an upper limit of an operation temperature of the polypropylene film is about 110°C, and it has been difficult to maintain high voltage resistance in an environment of a temperature exceeding 120°C, for example, 125°C.

For example, Patent Document 1 introduces a film having high breaking strength measured at room temperature; however, this film is low in crystallinity degree and has large heat shrinkage because it does not undergo relaxation and a heat treatment step after crosswise stretching, orientation of a molecular chain is relaxed in a high-temperature environment of 125°C, and therefore it cannot be said that the breaking strength of the film at the time of measuring at 125°C is high. Also Patent Document 2 introduces a polypropylene film having high breaking strength measured at room temperature; however, since a heat treatment temperature after crosswise stretching is high, orientation of a molecular chain is relaxed in a high-temperature environment of 125°C, and therefore it cannot be said that the breaking strength of the film at the time of measuring at 125°C is high. Further, it is unsatisfactory in terms of film forming stability and thickness accuracy. It cannot be said that these technologies are not necessarily enough for capacity retention of a capacitor at a high temperature in a practical use. Further, Patent Document 3 introduces a film which is improved in Young's modulus at 80°C; however, it cannot be said that the breaking strength of the film at the time of measuring at 125°C is high because a petroleum resin having Tg of 120°C or lower is added.

Further, one method for obtaining high insulating performance includes a method of adding a crystal nucleating agent. In general, the crystal nucleating agent of polypropylene is broadly classified into two types of a non-melt-type nucleating agent and a melt-type nucleating agent. By adding the crystal nucleating agent to propylene, it is possible to produce many crystal nuclei starting with a nucleating agent in melt crystallization, and a nucleating agent existing without melting in melt polypropylene is referred to as a non-melt type nucleating agent. On the other hand, the melt-type nucleating agent is characterized in that the nucleating agent is melted in melt polypropylene and forms a network structure in a cooling process, thereby forming a very minute spherocrystal. As the melt-type nucleating agent of polypropylene, a sorbitol-based nucleating agent is well known (e.g., Patent Documents 4 and 5). However, since these sorbitol-based nucleating agents do not have so high heat resistant temperature, the nucleating agent is decomposed during melt extrusion and does not achieve adequate effect, and therefore it cannot be said that an improvement of the voltage resistance at a high temperature of 125°C is enough. Examples of other melt-type nucleating agents include a nonitol-based nucleating agent. For example, Patent Document 6 introduces a technology in which the nonitol-based nucleating agent is added to homopolypropylene formed by polymerization by a metallocene catalyst. However, since the homopolypropylene formed by polymerization by a single-site catalyst is low in a melting point, it cannot be said that an improvement of the voltage resistance at a high temperature of 125°C is enough. Further, even when the nonitol-based nucleating agent is added to polypropylene formed by polymerization by an ordinary Ziegler-Natta catalyst, an improvement of the voltage resistance at a high temperature has not been recognized. Conventionally, the melt-type nucleating agent is added as a transparent nucleating agent for the purpose of improvement of transparency and reduction of haze of a polypropylene-based resin. In this case, a random copolymer which is low in crystallinity and has a large transparent effect, or homopolypropylene having low stereoregularity has been used as polypropylene.

PRIOR ART DOCUMENTS

Patent Document 1: JPH08-300470 A ;
Patent Document 2: JPH08-80564 A ;
Patent Document 3: JP2004-161799 A ;
Patent Document 4: JPS58-134714 A ;
Patent Document 5: JPS60-88049 A ; and
Patent Document 6: Japanese Translation of PCT International Application Publication No. 2013-538258.

EP2684676 A discloses a biaxially stretched polypropylene film comprising protrusions on both surfaces which has a tensile strength in the machine direction of 120 MPa to 250 Mpa and a tensile strength in a transverse direction of 250 MPa to 400 MPa. Metallized films are proposed as film capacitors.
Non-patent document 1: Nikkei Electronics, September 17th, 2012, p.57-62

PROBLEMS TO BE SOLVED BY THE INVENTION

The present inventors made earnest investigations to solve the above-mentioned problems, and consequently have now led to completion of the present invention. The present invention provides a polypropylene film capable of demonstrating excellent voltage resistance and reliability at a high temperature even in a capacitor application for high voltage, and in which suitable thermal dimensional stability and high rigidity are obtained at the same time in such applications as the above-mentioned capacitor application.

SOLUTIONS TO THE PROBLEMS

In a first aspect the invention provides a polypropylene film as defined in the accompanying claim 1.
In the present polypropylene film, the sum of the breaking strength thereof in the principal-axis direction of the film (measured at 125°C) and the breaking strength in the direction orthogonal to the principal axis of the film is 250 MPa or greater, the breaking strength in the direction orthogonal to the principal axis is 80 MPa or greater and the heat shrinkage percentage in a heating treatment at 125°C for 15 minutes in the principal axis direction is 1% or less.

EFFECTS OF THE INVENTION

Since the present invention can provide a polypropylene film in which high rigidity and excellent thermal dimensional stability at a high temperature are obtained at the same time, it is applicable to various applications such as packaging applications, tape applications and electrical applications including cable lapping and a capacitor, and it is particularly suitable for capacitor applications preferably for automobile, solar power generation and power generation by wind.

EMBODIMENTS OF THE INVENTION

In a polypropylene film of the present invention, the sum of the breaking strength thereof in the principal-axis direction of the film measured at 125°C and the breaking strength in the direction orthogonal to the principal axis of the film is 250 MPa or greater. As described in detail later, a direction in which breaking strength takes a maximum value among the breaking strengths circumferentially measured in a film plane is defined as a principal-axis direction of the film. Further, a direction which is orthogonal to the principal-axis direction is defined as a direction orthogonal to the principal axis. When a film sample has a shape of rectangle, a reel or a roll, a width of the sample is less than 50 mm, and the principal-axis direction cannot be measured in terms of breaking strength, a crystal orientation of $\alpha$ crystal (110) plane of a polypropylene film by a wide-angle X-ray is measured as follows, and thereby a principal-axis direction and a direction orthogonal to the principal axis are defined. Specifically, an X-ray is made incident to a direction perpendicular to the film surface, a crystal peak at $2\theta$ = about 14 degrees ($\alpha$ crystal (110) plane) is scanned in a circumferential direction, and a direction in which diffraction intensity of the resulting diffraction intensity distribution is high is taken as a principal-axis direction of the film, and a direction orthogonal to the direction is taken as a direction orthogonal to the principal axis.
When the sum of the breaking strength thereof in the principal-axis direction of the film measured at 125°C and the breaking strength in the direction orthogonal to the principal axis of the film is less than 250 MPa, the voltage resistance of the film at a high temperature may be decreased or the film may causes short-circuit in the case of mixing of extraneous materials, and there is a possibility of causing a capacity reduction or short breaking when forming a capacitor of the film. From the above-mentioned viewpoint, the sum of the breaking strength thereof in the principal-axis direction of the film measured at 125°C and the breaking strength in the direction orthogonal to the principal axis of the film is more preferably 280 MPa or more, and furthermore preferably 320 MPa or more. An upper limit of the breaking strength is not particularly limited; however, when the rigidity of the film is too high, sometimes flexibility is impaired, resulting in low handleability, and therefore the upper limit is 500 MPa.

The present inventors made earnest investigations, and consequently found that the sum of the breaking strength thereof in the principal-axis direction of the film measured at 125°C and the breaking strength in the direction orthogonal to the principal axis of the film is correlated highly with the voltage resistance of the capacitor at a high temperature, and it is important to perform control so as to increase the sum of the breaking strength thereof in the principal-axis direction of the film measured at 125°C and the breaking strength in the direction orthogonal to the principal axis of the film for improving voltage resistance and reliability at a high temperature of capacitor characteristics. Herein, examples of methods for controlling the sum of the breaking strength thereof in the principal-axis direction of the film measured at 125°C and the breaking strength in the direction orthogonal to the principal axis of the film in such a range include a method in which raw materials to be used, lengthwise/crosswise stretching magnification, or stretching temperature is controlled so as to be in the range described later, and a method in which in the heat treatment and relaxation treatment after biaxial stretching, first, the film undergoes a treatment step at a lower temperature than a stretching temperature (first step treatment step) and subjected to a heat treatment step at a temperature higher than the above treatment temperature and lower than a stretching temperature in a width direction at the time of biaxial stretching (second step treatment step).

The polypropylene film of the present invention has the breaking strength in the direction orthogonal to the principal axis of the film measured at 125°C of 80 MPa or greater. The polypropylene film of the present invention more preferably has the breaking strength of 100 MPa or greater, furthermore preferably 120 MPa or greater in the direction orthogonal to the principal axis of the film measured at 125°C. An upper limit of the breaking strength is not particularly limited; however, when the rigidity of the film is too high, sometimes flexibility is impaired, resulting in low handleability, and therefore the upper limit is 300 MPa. When the breaking strength in the direction orthogonal to the principal axis of the film measured at 125°C is less than 80 MPa, the voltage resistance of the film at a high temperature may be decreased or the film may cause short-circuit in the case of mixing of extraneous materials, and there is a possibility of causing a capacity reduction or short breaking when forming a capacitor of the film. Examples of methods for controlling the breaking strength in a direction orthogonal to the principal axis of the film measured at 125°C in such a range include a method in which raw materials to be used, lengthwise/crosswise stretching magnification, or stretching temperature is controlled so as to be in the range described later, and a method in which in the heat treatment and relaxation treatment after biaxial stretching, first, the film undergoes a treatment step at a lower temperature than a stretching temperature (first step treatment step) and subjected to a heat treatment step at a temperature higher than the above treatment temperature and lower than a stretching temperature in a width direction at the time of biaxial stretching (second step treatment step).

The polypropylene film of the present invention preferably has stress at 5% elongation (F5 value) in the direction orthogonal to the principal axis of the film measured at 125°C of 8 MPa or greater. The polypropylene film of the present invention more preferably has stress at 5% elongation (F5 value) in the direction orthogonal to the principal axis of the film measured at 125°C of 9 MPa or greater, furthermore preferably 10 MPa or greater. An upper limit is not particularly limited; however, when the rigidity of the film is too high, sometimes flexibility is impaired, resulting in low handleability, and therefore the upper limit is 30 MPa. When the F5 value in the direction orthogonal to the principal axis of the film measured at 125°C is less than 8 MPa, the voltage resistance of the film at a high temperature may be decreased or the film may cause short-circuit in the case of mixing of extraneous materials, and there is a possibility of causing a capacity reduction or short breaking when forming a capacitor of the film. Examples of methods for controlling the F5 value in a direction orthogonal to the principal axis of the film measured at 125°C in such a range include a method in which raw materials to be used, lengthwise/crosswise stretching magnification, or stretching temperature is controlled so as to be in the range described later, and a method in which in the heat treatment and relaxation treatment after biaxial stretching, first, the film undergoes a treatment step at a lower temperature than a stretching temperature (first step treatment step) and subjected to a heat treatment step at temperature higher than the above treatment temperature and lower than a stretching temperature in a width direction at the time of biaxial stretching (second step treatment step).

Further, the polypropylene film of the present invention is preferably a polypropylene film containing a polypropylene resin in which a meso-pentad fraction is 0.95 or more and a melting point exceeds 160°C, and a polypropylene melt-type nucleating agent for the above-mentioned polypropylene resin, and formed by biaxially stretching. It is very important for exerting the effect to add a melt-type nucleating agent to polypropylene having very high regularity and crystallinity. Conventionally, the melt-type nucleating agent is added as a transparent nucleating agent for the purpose of improvement of transparency and reduction of haze of a polypropylene-based resin. In this case, a random copolymer which is low in crystallinity and has a large transparent effect, or homopolypropylene having low stereoregularity has been used as polypropylene. The present inventors found that by adding a melt-type nucleating agent to polypropylene having high stereoregularity and high melting point, a surprising improvement effect can be exerted in stretching properties, mechanical properties, the voltage resistance and the heat shrinkage percentage, and these findings have now led to the present invention. The meso-pentad fraction is more preferably 0.97 or more, furthermore preferably 0.975 or more, and particularly preferably 0.98 or more. The meso-pentad fraction is a measure indicating the stereoregularity of a crystal phase of polypropylene measured by a nuclear magnetic resonance method (NMR method), and polypropylene having its higher value is preferred because it has high crystallinity degree, high melting point, high mechanical strength, and high breakdown voltage. An upper limit of the meso-pentad fraction is not particularly limited. In the present invention, polypropylene having a high meso-pentad fraction and a high melting point is particularly preferable polypropylene formed by a so-called Ziegler-Natta catalyst, and a method of appropriately selecting an electron-donating component is preferably employed. In polypropylene by this method, a molecular weight distribution (Mw/Mn) is 3.0 or more, and a loss of <2, 1> erythro site is 0.1 mol% or less. When the meso-pentad fraction of the polypropylene resin is less than 0.95, since the regularity of polypropylene is low, rigidity of a film is poor, and sometimes this leads to a decrease of the voltage resistance of the film, or the film is broken during transporting the film in a step of forming a metal film by vapor deposition or in winding processing of a capacitor device. The melting point of the polypropylene resin is more preferably 163°C or higher, and furthermore preferably 165°C or higher. When the melting point is lower than 160°C, since the crystallinity is low, rigidity of a film is poor, and sometimes this leads to a decrease of the voltage resistance of the film, or the film is broken during transporting the film in a step of forming a metal film by vapor deposition or in winding processing of a capacitor device. When a loss of <2, 1> erythro site is more than 0.1 mol%, a melting point of the polypropylene resin is lowered, and sometimes this leads to a decrease of the voltage resistance of the film at a high temperature.

In the polypropylene film of the present invention, a polypropylene resin preferably contains a melt-type nucleating agent. Examples of the nucleating agent of polypropylene include non-melt type nucleating agents such as phosphate, benzoate and talc and melt-type nucleating agents, and melt-type nucleating agents are preferably used in the present invention. The melt-type nucleating agent is a crystal nucleating agent which itself is fused or melted in a melt polypropylene, and exhibits a series of melting by heating and recrystallization by cooling. A method of measuring the melting and recrystallization is defined by ISO6271-10: 1999, and it can be monitored with use of melt rheology in a dynamic mode. Examples of the melt-type nucleating agent include sorbitol derivatives, nonitol derivatives, and triamide derivatives. Specific examples thereof include di(alkylbenzylidene)sorbitol, for example, dibenzylidene sorbitol, (2,4-dimethylbenzylidene) sorbitol, (1,3-dimethylbenzylidene) sorbitol, (2,4-diethylbenzylidene) sorbitol, (1,3-dibutylbenzylidene) sorbitol, (2,4-dibutylbenzylidene) sorbitol, (1,3-dimethoxybenzylidene) sorbitol, (2,4-dimethoxybenzylidene) sorbitol, (1,3-diethoxybenzylidene) sorbitol, (1,3-chlorobenzylidene) sorbitol, (2,4-methylbenzylidene) sorbitol, (monomethylbenzylidene) sorbitol, (2,4-diethoxybenzylidene) sorbitol, (1,3:2,4-dibenzylidene) sorbitol, (1,3:2,4-dimethoxybenzylidene) sorbitol, (1,3:2,4-diethoxybenzylidene) sorbitol, bis-(3,4-dimethylbenzylidene) sorbitol, 1,2,3-trideoxy-4,6:5,7-bis-o[(4-propylphenyl)methylene]-non itol, N,N',N"-tris-cyclohexyl-1,3,5-benzene-tricarboxamide, N,N',N"-tris-tert-butyl-1,3,5-benzene-tricarboxyamide, and N,N',N"-tris-(2-methylcyclohexane-1-yl)propane-1,2,3-triylc arboxamide. In general, since the above sorbitol-based nucleating agent does not have so high a heat resistant temperature, when an extrusion temperature of the polypropylene resin is high, sometimes thermally decomposed gas of the nucleating agent is generated to cause an air-bite defect and so on in the film. From such a viewpoint, among the above-mentioned melt-type nucleating agents, a nonitol-based nucleating agent or a triamide derivative nucleating agent is particularly preferably used because these compounds are known to have a high heat resistant temperature. The content of the melt-type nucleating agent is 0.01 to 1.0 part by mass, and preferably 0.02 to 0.6 parts by mass with respect to 100 parts by mass of the polypropylene resin. When the content is larger than 1.0 part by mass, sometimes the nucleating agent is exuded from the film surface, adheres to and is transferred to rolls or the like during the process of production of a film to soil the film surface. When the content is less than 0.01 part by mass, the effect of the nucleating agent may be small.

Next, linear polypropylene which is preferably used in the polypropylene film of the present invention will be described. The linear polypropylene is commonly used for a packaging material or a capacitor, and it preferably has a portion soluble in cold xylene (hereinafter, CXS) of 4% by mass or less. If the linear polypropylene does not satisfy the condition, sometimes film formation stability is inferior, voids may be formed in a film during producing a biaxially oriented film, and reductions of thermal dimensional stability and voltage resistance may increase.

Herein, the portion soluble in cold xylene (CXS) refers to a polypropylene component which is dissolved in xylene after a film is completely dissolved in the xylene and then precipitated at room temperature, and this portion is thought to correspond to a component which is hardly crystallized because of low stereoregularity or a low molecular weight and so on. When a large amount of such a component is contained in a resin, problems that the thermal dimensional stability of a film is deteriorated, and further the breakdown voltage is decreased may arise. Accordingly, the CXS is preferably 4% by mass or less, furthermore preferably 3% by mass or less, and particularly preferably 2% by mass or less. A lower limit of the CXS is not particularly limited; however, when it is less than 0.8%, stretching property may be deteriorated to disable an increase of stretching magnification. For the formation of such a linear polypropylene having CXS, a method of enhancing a catalyst activity in obtaining a resin, or a method of washing the obtained resin with a solvent or a propylene monomer itself and so on may be employed.

Such a linear polypropylene is more preferably one having a melt flow rate (MFR) of 1 to 10 g/10 minutes (230°C, load of 21.18 N), and particularly preferably one having a melt flow rate (MFR) of 2 to 5 g/10 minutes (230°C, load of 21.18 N) in terms of film forming property. In order to set the melt flow rate (MFR) to the above value, a method of controlling an average molecular weight or a molecular weight distribution and so on is employed.

Such a linear polypropylene is predominantly composed of a homopolymer of propylene, but the linear polypropylene may contain a copolymerizing component based on another unsaturated hydrocarbon within a range not impairing an object of the present invention, or a polymer which is not homopolymer of propylene may be blended. Examples of monomer components constituting such a copolymerizing component or blended polymer include ethylene, propylene (the case of blended polymer copolymerized), 1-butene, 1-pentene, 3-methylpentene-1, 3-methylbutene-1,1-hexene, 4-methylpentene-1, 5-ethylhexene-1, 1-octene, 1-decene, 1-dodecene, vinylcyclohexene, styrene, allylbenzene, cyclopentene, norbornene, and 5-methyl-2-norbornene. With respect to an amount of copolymerization or an amount of blend, it is preferred that the former is less than 1 mol% and the latter is less than 10% by mass in terms of resistance to breakdown and thermal dimensional stability.

Further, such a linear polypropylene may contain various additives such as a crystal nucleating agent, an antioxidant, a heat stabilizer, a sliding material, an antistatic agent, an antiblocking agent, a filler, a viscosity adjustor, and a coloring inhibitor within a range not impairing an object of the present invention.

Among these additives, it is important to select a type and an addition amount of the antioxidant from the viewpoint of long-term heat resistance. That is, such an antioxidant is preferably phenolic compounds having steric hindrance, and at least one thereof is a high molecular weight type having a molecular weight of 500 or more. Specific examples thereof include various ones, and it is preferred to use, for example, 2,6-di-t-butyl-p-cresol (BHT: molecular weight 220.4) in combination with 1,3,5-trimethyl-2,4,6-tris(3,5-di-t-butyl-4-hydroxybenzyl)b enzene (e.g., Irganox (registered trademark) 1330 manufactured by BASF CORPORATION: molecular weight 775.2) or tetrakis[methylene-3(3,5-di-t-butyl-4-hydroxyphenyl)propion ate]methane (e.g., Irganox (registered trademark) 1010 manufactured by BASF CORPORATION: molecular weight 1177.7). The total content of these antioxidants is preferably 0.03 to 1.0% by mass with respect to the total amount of polypropylene. When the amount of the antioxidant is too low, long-term heat resistance may be deteriorated. When the amount of the antioxidant is too high, the capacitor device may be adversely affected due to blocking at a high temperature resulting from bleeding out of the antioxidant. The content is more preferably 0.1 to 0.9% by mass, and particularly preferably 0.2 to 0.8% by mass.

Also in a preparation of a capacitor, from the viewpoint of exerting device processability and further heat resistance as a capacitor in a circumstance in which a temperature of a process condition increases, the polypropylene film of the present invention has the heat shrinkage percentage in a heating treatment at 125°C for 15 minutes in a principal-axis direction of the film of 1% or less. The heat shrinkage percentage is more preferably 0.5% or less, and furthermore preferably 0.2% or less. When the heat shrinkage percentage is more than 1.0%, since a thermal deformation amount at a high temperature is large, sometimes shrinkage of a film itself occurs due to heat in a step of capacitor production or a step of using a capacitor to produce a gap between a film and a metallikon, the film is deformed, and the voltage resistance is decreased. A lower limit of the heat shrinkage percentage is not particularly limited; however, when the film is excessively expanded, sometimes a state of winding a device is relaxed due to heat in a step of capacitor production or a step of using a capacitor, and therefore the heat shrinkage percentage is preferably -1.0%. Herein, control of the heat shrinkage percentage in the principal-axis direction of the film in a heating treatment at 125°C for 15 minutes in such a range can be achieved, for example, by controlling, in the range described later, the raw materials to be used, lengthwise/crosswise stretching magnification, stretching temperature, and the conditions at the two steps of heat treatment and relaxation treatment steps after biaxial stretching.

In the polypropylene film of the present invention, it is preferred that when the breaking strength in a direction orthogonal to the principal axis of the film measured at 23°C is denoted by Fm (MPa), and the heat shrinkage percentage in a heating treatment at 125°C for 15 minutes in a direction orthogonal to the principal axis of the film is denoted by Sm (%), the Fm and the Sm satisfy the following formula (1):

$$Fm/Sm \geq 100 \cdots (1)$$

In general, the breaking strength and the heat shrinkage percentage in a direction orthogonal to the principal axis of the film are parameters contradictory to each other, and when the value of Fm is increased, the value of Sm is also increased, and therefore it is difficult to increase a value of Fm/Sm. That is, that the sum of the breaking strength in a width direction of the film and the breaking strength in a longitudinal direction of the film measured at 125°C is 250 MPa or more, and the value of Fm/Sm is high, represents to achieve high strength and low heat shrinkage percentage at the same time. The value of Fm/Sm is more preferably 130 or more, and furthermore preferably 140 or more. When the value of Fm/Sm is less than 100, since the value of Fm is low, sometimes this leads to a decrease of the voltage resistance of the film, or the film is broken during transporting the film in a step of forming a metal film by vapor deposition or in winding processing of a capacitor device. Further, since the value of Sm is high, a thermal deformation amount at a high temperature is large, sometimes shrinkage of a film itself occurs due to heat in a step of capacitor production or a step of using a capacitor to produce a gap between films, and the voltage resistance is decreased. An upper limit of the value of Fm/Sm is not particularly limited; however, when the film is excessively expanded, sometimes a state of winding a device is relaxed due to heat in a step of capacitor production or a step of using a capacitor. Control of the value of Fm/Sm in such a range can be achieved, for example, by controlling, in the range described later, the raw materials to be used, lengthwise/crosswise stretching magnification, stretching temperature, and the conditions at the two steps of heat treatment and relaxation treatment steps after biaxial stretching.

In the polypropylene film of the present invention, it is preferred that a crystallization peak temperature which can be observed in a cooling process from a melt state by a differential scanning calorimeter, exceed 125°C. A crystallization temperature may be used as a measure of the effect of the nucleating agent. When the crystallization temperature is high, it can be said that a capability of nucleation is high since nucleation is performed at a higher temperature in a melt crystallization process. The crystallization temperature is more preferably 128°C or higher, and furthermore preferably exceeds 130°C. When the crystallization temperature is 125°C or lower, sometimes the effect of the nucleating agent is small. An upper limit of the crystallization temperature is not particularly limited; however, 140°C is actually an upper limit. Control of the crystallization temperature in such a range can be achieved, for example, by appropriately adjusting the raw materials to be used and the content of a nucleating agent.

The polypropylene film of the present invention is moderately roughened, and from the viewpoint of achieving uniformity of spacing between film layers, easy sliding property between films or between a film and a transporting roll, and reliability as a capacitor, average roughness SRa of a central surface of at least one surface of a film is preferably 30 nm or more, more preferably 50 nm or more, and furthermore preferably 70 nm or more. When the average roughness SRa of a central surface is less than 30 nm, slip of the film is extremely deteriorated, sometimes handleability is decreased, a wrinkle is easily produced, capacity change increases in consequence of a wrinkle or the like when continuously using a film as a capacitor, and reliability of a capacitor is decreased when using as a capacitor formed by laminating films because there is no moderate gap between film layers and therefore a self-healing function hardly operates. An upper limit of the average roughness SRa is not particularly limited; however, when it is too large, sometimes the voltage resistance is decreased, and therefore it is preferably 300 nm. In order to control an average roughness SRa of a central surface of the polypropylene film of the present invention within a preferred range, it becomes possible to achieve this, for example, by controlling the conditions of materials to be used, a cooling temperature at the time of cooling/solidifying a melt sheet and lamination configuration which are described later within preferred ranges.

The polypropylene film of the present invention preferably has a configuration formed by laminating two or more layers in a thickness direction from the viewpoint of having excellent suitability for capacitor device processing even in a thin film by roughening a film surface to form moderate asperities, and exerting high voltage resistance even at a high temperature, and specifically it has a configuration of two or more layers in which at least one surface layer is an A-layer, and has, for example, a two layer configuration of A-layer/B-layer, more preferably has a three-layer configuration of A-layer/B-layer/A-layer, and a four or more-layer configuration in which A-layers are outermost layers on both film surfaces. When the A-layer is set to outermost layers, the nucleating agent can be prevented from exuding to the film surface and soiling a roll or a film. Herein, the A-layer is defined as a layer which does not substantially contain the melt-type nucleating agent. As a method for forming the surface of the polypropylene film of the present invention, a method of using a crystal transformation of the polypropylene of the A-layer can be preferably used. While there is a method of adding particles or a polymer incompatible with polypropylene to the A-layer, the method of using the crystal transformation is preferred because there is a possibility that electric characteristics are deteriorated by adding components other than polypropylene and a crater configuration similar to a conventional capacitor surface is attained. Hereinafter, a surface form obtained by the crystal transformation will be described.

A method for forming a surface using crystal transformation is a method for forming a surface using two crystal systems which polypropylene has, which is described in Document (M. Fujiyama, Journal of Applied Polymer Science, Vol. 36, P.985-1948 (1988) or the like, and $\alpha$ crystalline (monoclinic crystal system, crystal density 0.936 g/cm$^3$) spherocrystal and $\beta$ crystalline (hexagonal crystal system, crystal density 0.922 g/cm$^3$) spherocrystal are previously formed on a non-stretched sheet, and in a stretching step, by crystal transformation of the thermally unstable $\beta$ crystal to $\alpha$ crystal, asperities are formed on the film surface. Since a basic unit of the surface asperities obtained by this method results from the deformation of the spherocrystal, the shape exhibits a crater configuration formed in the circular form. That is, an aspect in which a projection portion is arranged in a shape of a circle or an ellipse is observed. A typical surface configuration obtained by the crystal transformation is formed by the fact that many crater configurations formed in the shape of an ellipse exist, and a portion projected from the film surface (salient) has a crater configuration by ranging circularly. That is, there is a characteristic that asperities are hardly formed in an area where no β crystalline spherocrystal exists and the area becomes relatively flat. In order to form asperities on the surface of the polypropylene film of the present invention, it becomes possible to achieve this by appropriately adjusting a casting (cooling) drum temperature to 60 to 120°C during the process of solidifying the film on the cooling drum after melt extrusion to obtain a non-stretched sheet in the film production process, and thereby, to form the β crystalline spherocrystal in the A-layer. Further, when 0.05 to 10% by mass of branched polypropylene is contained in the polypropylene resin of the A-layer, it is preferred because the asperities are more efficiently formed on the film surface.

Herein, when the polypropylene film of the present invention has a configuration of laminating two or more layers in a film thickness direction, a ratio of a thickness of the A-layer (in the case where A layer is present on both surface layers, a ratio of total thicknesses combining both surface layers) to total thickness is preferably 1 to 60%, and more preferably 5 to 40% from the viewpoint of film forming property and control of surface configuration. When the ratio of the A-layer is too large, the B layer substantially containing the melt-type nucleating agent becomes thin to decrease the voltage resistance at a high temperature. On the other hand, when the ratio of the A-layer is too small, sometimes the asperities cannot be efficiently formed on the film surface and suitability for capacitor device processing cannot be achieved. Herein, the A layer can be distinguished from the B layer by identifying a resin interface between the A layer and the B layer by forming a film cross section and observing the cross section using a scanning electron microscope(SEM).

Since the polypropylene of the present invention is excellent in high-temperature characteristics, it is suitably used for general industry applications and packaging applications. Particularly, since the polypropylene is excellent in the voltage resistance at a high temperature, it is naturally useful for a film for common capacitors having a common thickness of 30 μm or less, and is particularly suitable for a thin film heat-resistant film capacitor required for automobile applications (including a hybrid car application) which are used in the high-temperature environment particularly. In particular, a film thickness is preferably 0.5 μm or more and less than 15 μm, more preferably 0.5 μm or more and 10 μm or less, and furthermore preferably 0.8 μm or more and 5.0 μm or less. Examples of controlling the film thickness in such a range include a method in which raw materials to be used, lengthwise/crosswise stretching magnification, or stretching temperature is controlled so as to be in the range described later, and a method in which in the heat treatment and relaxation treatment after biaxial stretching, first, the film undergoes a treatment step at a lower temperature than a stretching temperature (first step treatment step) and subjected to a heat treatment step at a temperature higher than the above treatment temperature and lower than a stretching temperature in a width direction at the time of biaxial stretching (second step treatment step).

The polypropylene film of the present invention is preferably used as a dielectric film for a capacitor, but it is not limited to a type of a capacitor. Specifically, the polypropylene film may be used for any of a foil-wound capacitor and an evaporated metal film capacitor in terms of electrode configuration, and it is preferably used for an oil-impregnated capacitor impregnated with an insulating oil and a dry capacitor not using an insulating oil at all. Further, a capacitor may be a rolled type or may be a laminated type. However, the polypropylene film of the present invention is preferably used as an evaporated metal film capacitor from the characteristics of the film of the present invention.

In addition, a polypropylene film is generally low in surface energy, and it is difficult to stably apply metal deposition, and therefore it is preferred to surface-treat the polypropylene film before vapor deposition for the purpose of making the metal deposition better. Specific examples of surface treatment include corona discharge treatment, plasma treatment, glow treatment and flame treatment. While in general, a surface wet tension of a polypropylene film is about 30 mN/m, it is preferred to increase the wet tension of a polypropylene film to 37 to 50 mN/m, preferably to about 39 to 48 mN/m by these surfaces treating because adhesion to a metal film is excellent and protective property is improved.

The polypropylene film of the present invention can be obtained by using a raw material capable of providing the above-mentioned properties and by being biaxially stretched. As a method of biaxial stretching, any method of an inflation simultaneous biaxial stretching, a tenter simultaneous biaxial stretching, and a tenter sequential biaxial stretching may be employed, and among these method, a tenter sequential biaxial stretching is preferably employed from the viewpoint of controlling film forming stability of a film, uniformity of a thickness, the breaking strength of a film, and thermal dimensional stability. The polypropylene film of the present invention may be a single layer film or a laminated film. Examples of lamination methods include a method of bonding films to each other by a laminate, a feed block system by coextrusion, a multimanifold style, and a method by coating. Further, in lamination, two or more layers may be laminated in a film thickness direction, or layers having different nucleating agent amounts, or a layer not containing the nucleating agent may be laminated.

Next, a method for producing the polypropylene film of the present invention will be described. First, a polypropylene resin is melt extruded on a support to form a polypropylene resin sheet, and the polypropylene resin sheet undergoes lengthwise stretching, crosswise stretching and sequential biaxial stretching and then is subjected to heat treatment and relaxation treatment to produce a polypropylene film. The method for producing the polypropylene film will be described in more detail below, but the method is not necessarily limited to this.

First, the melt-type nucleating agent is added in an amount of 0.01 to 1.0 part by mass with respect to 100 parts by mass of a polypropylene resin in which a meso-pentad fraction is 0.95 or more and a melting point is 160°C or higher, and the resulting mixture is melt-extruded, made to pass through a filter for filtration, extruded from a slit-shaped nozzle at temperatures of 230°C to 260°C, and is solidified on a cooling drum controlled so as to be 20°C to 120°C to obtain a non-stretched sheet. Or, it may also be employed that a polypropylene material B formed by mixing a melt-type nucleating agent with a polypropylene resin in which a meso-pentad fraction is 0.95 or more and a melting point exceeds 160°C is supplied to a single-screw extruder for a B-layer, and a polypropylene material A not substantially containing the melt-type nucleating agent is supplied to a single-screw extruder for a A-layer, and a resin laminated in the form of a three-layer configuration of A-layer/B-layer/A-layer at 200 to 260°C in the feed block system based on melt coextrusion, is extruded from a slit-shaped nozzle, and solidified on a cooling drum controlled so as to be 60°C to 120°C to obtain a non-stretched sheet. As a method of bringing a film into close contact with a cooling drum, any method of an electrostatic application method, a close contact method using a surface tension of water, an air knife method, a press roll method and a water casting method may be employed.

Next, the non-stretched film is biaxially stretched and biaxially oriented. First, the non-stretched film is made to pass through a roll maintained at 60 to 150°C to be preheated, and subsequently the sheet is stretched by 2 to 10 times in a longitudinal direction while maintaining the sheet at 60 to 150°C, and cooled to room temperature. The stretching magnification of the longitudinal direction is more preferably 4.5 times to 9 times, still more preferably 5.1 times to 8 times, furthermore preferably 5.4 times to 8 times, and most preferably 5.8 times to 8 times. The stretching method and the stretching magnification are not particularly limited, and they are appropriately selected according to polymer characteristics.

Then, the lengthwise single stretched film was introduced in a tenter, and the end of the film is grasped with a clip and crosswise stretching is performed by a magnification of 5 to 15 times, more preferably 6 to 12 times in a width direction at 140 to 165°C. When a stretching magnification in a width direction is less than 5 times, mechanical strength in a width direction of a polypropylene film may be decreased or the voltage resistance may be decreased because thickness unevenness increases. On the other hand, when a stretching magnification in a width direction is more than 15 times, the film is sometimes easily broken to reduce productivity.

In the present invention, it is important to perform multi-step heat treatment in subsequent heat treatment and relaxation treatment steps, namely a first step heat treatment is performed at a temperature of 115°C or higher and 140°C or lower while giving relaxation of 2 to 20% in a width direction with a clip grasping a width direction under tension, and a second step heat treatment providing heat fixation at a temperature higher than the first step heat treatment temperature and lower than a crosswise stretching temperature with a clip grasping a width direction under tension, is performed from the viewpoint of uniformly relaxing a film in-plane to reduce locally uneven thickness, increasing film rigidity, reducing the heat shrinkage percentage of a film, and improving film voltage resistance.

A relaxation ratio in the relaxation treatment step is preferably 5 to 18%, and more preferably 8 to 15% from the viewpoint of achieving thermal dimensional stability. When the relaxation ratio is more than 20%, the film is excessively relaxed in the tenter, and therefore the product may crinkle to cause unevenness during vapor deposition. On the other hand, when the relaxation ratio is less than 2%, thermal dimensional stability is not achieved, and sometimes a capacity reduction or short breaking at a high temperature when forming a capacitor of the film is caused.

The first step heat treatment temperature is preferably 115°C or higher and 140°C or lower, more preferably 120°C or higher and 138°C or lower, and furthermore preferably 125°C or higher and 135°C or lower from the viewpoint of maintaining orientation of a molecular chain during stretching and enhancing mechanical strength. When heat treatment is carried out at a temperature lower than 115°C, a capacity reduction or short breaking may occur in capacitor characteristics at a high temperature. On the other hand, when heat treatment is carried out at a temperature higher than 140°C, mechanical strength of a film may be reduced because relaxation of orientation of a molecular chain proceeds.

When the second step heat treatment temperature is set to a temperature which is higher than the first step heat treatment temperature and lower than a crosswise stretching temperature, a highly motile amorphous molecular chain which is insufficiently relaxed in the first step heat treatment step can be relaxed to reduce the heat shrinkage percentage. From this viewpoint, the second step heat treatment temperature is preferably the first step heat treatment temperature plus 5°C or higher and the crosswise stretching temperature minus 5°C or lower, and furthermore preferably the first step heat treatment temperature plus 8°C or higher and the crosswise stretching temperature minus 8°C or lower.

After undergoing the multi-step heat treatment, the film undergoes a cooling step at 80°C to 100°C while grasping a width direction under tension with a clip, and is guided out of the tenter, and clips at both ends of the film are released. Film edge portion is slit in a winding step and the resulting film product is wound in the form of a roll. Here, a surface of the film to undergo vapor deposition is preferably subjected to corona discharge treatment in the air, nitrogen, carbon dioxide or a mixture gas thereof before winding the film in order to enhance adhesion of an evaporated metal.

In the biaxially stretched film obtained by the above-mentioned technique, in general, a longitudinal direction of a film is the direction orthogonal to the principal axis of the film, and a width direction of a film is the principal-axis direction of the film.

In the present invention, the above-mentioned method in which a metal film is disposed on the polypropylene film surface to form a metal film-laminated film is not particularly limited, and for example, a method in which aluminum is deposited on at least one surface of a polypropylene film to dispose a metal film serving as an internal electrode of a film capacitor such as an aluminum evaporated film, is preferably employed. In this case, another metal component such as nickel, copper, gold, silver, chromium or zinc may be deposited concurrently with or in succession to aluminum. A protective layer may be formed of oil or the like on the evaporated film.

In the present invention, after a metal film is formed, as required, the metal film-laminated film may be subjected to annealing treatment at a specified temperature or heat treatment. Further, at least one surface of the metal film-laminated film may be coated with polyphenylene oxide and so on for the purpose of insulation or another.

The metal film-laminated film thus obtained can be laminated or wound by various methods to form a film capacitor. A preferred production method of a wound type film capacitor is exemplified as follows.

Aluminum is deposited on one surface of a polypropylene film under a reduced pressure. In this time, aluminum is deposited in the form of a stripe having a margin portion running in a longitudinal direction of a film. Next, an edge is put in a center of each evaporated portion on the surface and a center of each margin portion to slit the film to thereby prepare a tape-like winding reel in which a surface has a margin at one side. Of two tape-like winding reels each having a margin on a right side or a left side, a left margin one and a right margin one are overlaid so that the evaporated portion is protruded from the margin portion in a width direction, and wound to obtain a wound body.

When vapor deposition is performed on both surfaces, aluminum is deposited in the form of a stripe having a margin portion running in a longitudinal direction on one surface, and on the other surface, aluminum is deposited in the form of a stripe so that a margin portion in a longitudinal direction is positioned at a center of the evaporated portion on a backside. Next, an edge is put in a center of each of the frontside and backside margin portions to slit the film to thereby prepare a tape-like winding reel in which both surfaces each have a margin at one side (for example, if the frontside has a margin on the right side and the backside has a margin on the left side) . The obtained reel and a non-deposited coupled film are overlaid so that a metalized film is protruded from the coupled film in a width direction, and wound to obtain a wound body.

A core material is eliminated from the wound body thus prepared, and the wound body is pressed, and metallikon is sprayed at both ends to form external electrodes, and a lead wire is welded to the metallikon to obtain a wound type film capacitor. Applications of film capacitors are very wide, for example, railway vehicles, automobiles ( hybrid cars, electric vehicles), solar energy generation, wind force power generation and household electrical appliances. The film capacitor of the present invention can be suitably used for these applications. The film capacitor of the present invention can be suitably used for other applications such as packaging films, mold release films process films, hygiene products, agricultural materials, building industry products, and medical products.

Measurement method of characteristics in the present invention, and evaluation method of effects are as follows.

(1) Film Thickness

Thicknesses of arbitrary 10 locations of a polypropylene film were measured in an atmosphere of 23°C and 65%RH using a contact electronic micrometer manufactured by Anritsu Co., Ltd. (K-312A type), and average thereof was taken as a film thickness of a polypropylene film.

(2) Breaking Strength of Film Measured at 23°C

A polypropylene film was prepared, and the film was cut out in a rectangle of 50 mm long and 10 mm wide in an arbitrary direction to form a sample <1>. Next, a sample <2> was taken at a position rotated by 15 degrees from a long side direction of a rectangular sample. Similarly, samples <3> to <12> were taken at a position rotated by 15 degrees from a long side direction of a rectangular sample. Next, the rectangular sample <1> was set in a tensile tester (TENSILON UCT-100 manufactured by ORIENTEC CORPORATION) with an initial distance between chucks of 20 mm, and a tensile test of the film was carried out in an atmosphere of 23°C setting a tensile speed to 300 mm/minute. A load value at the time when the sample was broken was read, and a value obtained by dividing the load value by a cross-section area (film thickness $\times$ width (10 mm)) of a sample before the test was calculated as stress of breaking strength. Measurement was carried out five times for each sample, and based on the average of five measurements, the sample was evaluated. Similarly, breaking strength of each of samples <2> to <12> was calculated, and the maximum value among samples <1> to <12> was defined as a breaking strength in the principal-axis direction of the film.

As a film thickness used for calculation of the breaking strength, a value measured in the above (1) was used.

(3) Breaking Strength of Film Measured at 125°C

A polypropylene film was prepared, and samples whose long side directions are the principal-axis direction of the film and the direction orthogonal to the principal axis of the film which were each determined in (2) were cut out in a rectangle of 50 mm long and 10 mm wide, and a rectangular sample was set in a tensile tester (TENSILON UCT-100 manufactured by ORIENTEC CORPORATION) with an initial distance between chucks of 20 mm, and the sample was charged into an oven heated at 125°C together with the chucks and heated for 1 minute. Thereafter, a tensile test of the film was carried out setting a tensile speed to 300 mm/minute. A load value at the time when the sample was broken was read, and a value obtained by dividing the load value by a cross-section area (film thickness × width (10 mm)) of a sample before the test was calculated as stress of breaking strength. Measurement was carried out five times for each sample, and based on the average of five measurements, the sample was evaluated. As a film thickness used for calculation of the breaking strength, a value measured in the above (1) was used.

(4) Stress at 5% elongation (F5 value) of a film measured at 125°C

A polypropylene film was prepared, and samples whose long side directions are the principal-axis direction of the film and the direction orthogonal to the principal axis of the film which were each determined in (2) were cut out in a rectangle of 50 mm long and 10 mm wide, and a rectangular sample was set in a tensile tester (TENSILON UCT-100 manufactured by ORIENTEC CORPORATION) with an initial distance between chucks of 20 mm, and the sample was charged into an oven heated at 125°C together with the chucks and heated for 1 minute. Thereafter, a tensile test of the film was carried out setting a tensile speed to 300 mm/minute. A load value applied on the film at the time when the sample was elongated by 5% was read, and a value obtained by dividing the load value by a cross-section area (film thickness × width (10 mm)) of a sample before the test was calculated as a F5 value. Measurement was carried out five times for each sample, and based on the average of five measurements, the sample was evaluated. As a film thickness used for calculation of the F5 value, a value measured in the above (1) was used.

(5) Heat Shrinkage Percentage in Heating Treatment at 125°C for 15 minutes

A polypropylene film was prepared, and samples whose long side directions are the principal-axis direction of the film and the direction orthogonal to the principal axis of the film which were each determined in (2) were cut out in a rectangle of 50 mm long and 10 mm wide. Positions of 15 mm distance from both ends were marked so that a test length was about 20 mm, and a distance between marks was measured with use of a profile projector (V-16A) manufactured by Nikon Corporation to determine a test length ($l_0$) . Then, a test piece was tucked into paper, heated for 15 minutes in a state of 0-load in an oven maintained at 125°C, and taken out to be cooled at room temperature. A dimension ($l_1$) was measured, and a heat shrinkage percentage was calculated as an average of five measurements by the following formula.

$$\text{Heat shrinkage percentage} = \{(l_0 - l_1)/l_0\} \times 100 \ (\%)$$

Herein, the heat shrinkage percentage in a heating treatment at 125°C for 15 minutes in a direction orthogonal to the principal axis of the film was defined as Sm (%).

(6) Crystallization Temperature

Using a differential scanning calorimeter (EXSTAR DSC6220 manufactured by Seiko Instrument Inc.), a temperature of 3 mg of a film sample is raised from 30°C to 230°C at a rate of 40°C/min in a nitrogen atmosphere. Then, the sample is maintained at 260°C for 5 minutes, and its temperature is lowered to 30°C at a rate of 40°C/min. A peak temperature of a heat-release curve obtained in this time is taken as a crystallization temperature.

(7) Melting Point

Using a differential scanning calorimeter (EXSTAR DSC6220 manufactured by Seiko Instrument Inc.), a temperature of 3 mg of a polypropylene chip is raised from 30°C to 260°C at a rate of 40°C/min in a nitrogen atmosphere. Then, the chip is maintained at 260°C for 5 minutes, and its temperature is lowered to 30°C at a rate of 40°C/min. Then, after the chip is maintained at 30°C for 5 minutes, its temperature is raised from 30°C to 260°C at a rate of 40°C/min. A peak temperature of an endothermic curve obtained in this time is taken as a melting point.

(8) Meso-Pentad Fraction

Polypropylene of a film or a chip-shape was extracted with n-heptane of 60°C for 2 hours to remove impurities and additives in the polypropylene, and dried under vacuum at 130°C for 2 hours or more to form a sample. The sample was dissolved in a solvent, and the meso-pentad fraction (mmmm) was determined under the following conditions using $^{13}$C-NMR.

Measurement condition

- Apparatus: DRX-500 manufactured by Bruker Corporation.
- Measurement nucleus: $^{13}$C nucleus (resonance frequency: 125.8 MHz)
- Measurement concentration: 10% by mass
- Solvent: benzene: di-ortho-dichlorobenzene = 1 : 3 mixed solution (volume ratio)
- Measurement temperature: 130°C
- Spin rotation number: 12Hz
- NMR sample tube: 5 mm tube
- Pulse width: 45° (4.5 $\mu$s)
- Pulse repetition interval: 10 second
- Data points: 64K
- Numbers of accumulations: 10000
- Measurement mode: complete decoupling

ANALYSIS condition

LB (line broadening factor) was taken as 1, and Fourier transformation was performed, and a mmmm peak was set to 21.86 ppm. Using a WINFIT software (manufactured by Bruker Corporation) , peak splitting was carried out. In doing so, peak splitting was carried out from a peak on high magnetic field as follows, and an automatic fitting of the software was carried out to perform the optimization of peak splitting, and then the total of peak fractions of mmmm and ss (spinning side band peak of mmmm) was taken as a meso-pentad fraction (mmmm).

- (1) mrrm
- (2) (3) rrrm (split as two peaks)
- (4) rrrr
- (5) mrmm+rmrr
- (6) mmrr
- (7) mmmr
- (8) ss (spinning side band peak of mmmm)
- (9) mmmm
- (10) rmmr

The same measurement was carried out five times for the same sample, and the average of the resulting meso-pentad fractions was taken as a meso-pentad fraction of the sample.

(9) Evaluation of characteristics of vapor deposition capacitor (voltage resistance/reliability at 110°C, device processability)

Evaporated patterns of aluminum having a so-called T-shaped margin pattern in which film resistance was 8Ω/sq and a margin portion was provided in a direction perpendicular to the longitudinal direction, were formed on a side of the surface in contact with the casting drum of the films which had been obtained in the Examples and the Comparative Examples described later with a vacuum evaporation machine manufactured by ULVAC, Inc. to obtain an evaporated reel whose width is 50 mm.

Then, using the reel, a capacitor device was wound up with a device winding machine (KAW-4NHB) manufactured by Kaido MFG. Co. Ltd., and a metallikon was applied, and the film was subjected to heat treatment at 120°C for 10 hours under a reduced pressure, and a lead wire was attached to finish a capacitor device.

Using 10 of the capacitor devices thus obtained, a voltage of 300 VDC was applied to each of the capacitor device at a high temperature of 110°C and held at the voltage for 10 minutes, and then a so-called step-up test in which an applied voltage is gradually increased at a rate of 50 VDC/1 minute in a stepwise manner repeatedly was carried out.

<Voltage Resistance>

In this time, a change in capacitance was measured, and plotted on a graph, and a voltage at which the capacitance was reduced to 70% of an initial value, was divided by a film thickness (the above (1)) to perform voltage resistance evaluation. Evaluation criteria were as follows.

S: 500 V/$\mu$m or more
A: 450 V/$\mu$m or more and less than 500 V/$\mu$m
B: 400 V/$\mu$m or more and less than 450 V/$\mu$m
C: less than 400 V/$\mu$m

S and A can be used. B and C are inferior in practical performance

<Reliability>

After a voltage was increased until a capacitance was reduced to 10% of an initial value, a capacitor device was disassembled and a state of breaking was checked to rate reliability according to the following criteria.

S: There is no change in a device shape and penetrating breakage is not observed.
A: There is no change in a device shape and penetrating breakage within 10 film layers is observed.
B: Change in a device shape is found or penetrating breakage exceeding 10 film layers is observed.
C: A device shape is broken.

S can be used without a problem, and A can be used depending on a condition. B and C are inferior in practical performance.

<Device Processability>

The sample was rated according to the following criteria. A capacitor device was prepared in the same manner as in the above, and a shape of the device was visually checked.

A: Level that there are no film displacement and no deformation of a capacitor device, and no interference to subsequent process steps
B: Level that there are slightly film displacement and deformation of a capacitor device, but no interference to subsequent process steps
C: Level that there are large film displacement and large deformation of a capacitor device, and interference to subsequent process steps
A and B can be used. C is difficult in practical use.

(10) Analysis of Content of Melt-Type Nucleating Agent

Three to four grams of a polypropylene film sample was shredded, and frost shattering thereof was carried out. Soxhlet extraction of the shattered sample was carried out using a methanol/chloroform (= 1/1 (v/v)) mixture, and FTIR, $^1$H-NMR, and MALDI-MS measurements of the extracted substances were carried out. The presence or absence of the melt-type nucleating agent was identified.

<Measurement Condition of FT-IR>

FT-IR apparatus: IRPrestige-21 (manufactured by SHIMADZU CORPORATION)
Detector: DLATGS
Measuring mode: Transmit
Resolution: 4 cm$^{-1}$
Number of integrations: 64
Sample preparation: KBr tablet method (4 mm $\varphi$)

<Measurement Conditions of $^1$H-NMR>
Apparatus: ECA400 (manufactured by JEOL Ltd.)
Measurement nucleus: $^1$H
Observing Frequency: 400 MHz
<Measurement Conditions of MALDI-MS>
Apparatus: AXIMA-TOF2 (manufactured by SHIMADZU CORPORATION)
Ionization method: MALDI (matrix-assisted laser desorption/ionization)

(11) Film Breakdown Voltage in 125°C atmosphere (V/$\mu$m)

In an oven maintained at 125°, a film is heated for 1 minute, and in this atmosphere, a voltage resistance test was performed 30 times according to JIS C 2330 (2001) 7.4.11.2 B method (plate electrode method) , and the resulting value was divided by a film thickness (the above (1)) to convert to (V/$\mu$m) , and excluding 5 points exhibiting the largest breakdown voltage and 5 points exhibiting the smallest breakdown voltage, average of 20 points is taken as a film breakdown voltage in a 125°C atmosphere.

(12) Evaluation of Insulation Defect

In an atmosphere of 23°C and 65%RH, a polypropylene film (400 mm × 500 mm) as a measurement sample was sandwiched between a deposited surface of an one-side aluminum-evaporated PET film (310 mm × 410 mm) as an upper electrode and a copper plate (750 mm × 400 mm) as a lower electrode. Then, using an electric power source (BDV10-20P manufactured by HAIDEN LABORATORY), a voltage was applied to the upper electrode at a voltage raising rate of 0.01 kV/sec and held for 1 minute after reaching 0.1 kV. Thereafter, stepwise voltage raising of holding for 1 minute by 0.1kV was repeated at a voltage raising rate of 0.01 kV/sec and a voltage was made to reach 1.0kV. Number of breakings (number of insulation defects) produced at each voltage was counted, and from the following criteria of first breaking initiation voltage and accumulated number of breakings, insulation defect was rated.
In addition, when a measurement sample does not reach a size of 400 mm × 500 mm, the number of tests was increased so as to have a total area of 0.2 m$^2$.

S: Initial breaking initiation voltage is 800 V or more
A: Accumulated number of breakings of 600 V or more and less than 800 V is 1 or more and less than 150
B: Accumulated number of breakings of 600 V or more and less than 800 V is 150 or more
C: Initial breaking initiation voltage is less than 600 V

S and A can be used. B and C are inferior in practical performance.

EXAMPLES

Hereinafter, the present invention will be further described by way of examples. Example 4 does not illustrate claim 1.

(Example 1)

To a polypropylene resin formed by polymerization by a Ziegler-Natta catalyst in which a meso-pentad fraction was 0.98, a melting point was 167°C, and a melt flow rate (MFR) was 2.6 g/10 minutes, 0.3% by mass of a nonitol-based melt-type nucleating agent ($\alpha$ crystal nucleating agent) "NX-8000" manufactured by Milliken Chemical was added, and the resulting mixture was kneaded/extruded by an extruder set at 240°C, and the resulting strands were cooled with water to be formed into chips. These chips were supplied to an extruder set at 240°C, and melt-extruded in the form of a sheet through a T-shaped slit die, and the melt sheet was brought into close contact with a casting drum maintained at 30°C by application of electrostatic to be cooled and solidified, and thereby a non-stretched sheet was obtained. Subsequently, the sheet was gradually preheated to 140°C by a plurality of rolls, and maintained at 140°C, and made to pass through rolls which were differentiated in a circumferential velocity, and thereby, the sheet was stretched by 6 times in a longitudinal direction. Subsequently, the film was introduced into a tenter, and stretched by 10 times in a width direction at a temperature of 160°C, and then the film was heat-treated at 130°C while relaxing by 10% in a width direction as a first step heat treatment and relaxation treatment, and further heat-treated at 140°C while grasping the film in a width direction with a clip as a second step heat treatment. Thereafter, the film underwent a cooling step at 100°C and was guided out of the tenter, and the clip at the end of the film was released, and the surface of the film (side of the surface in contact with the casting drum) was subjected to a corona discharge treatment at treating intensity of 25

W·min/m$^2$ in the atmosphere, and a film having a thickness of 2.8 $\mu$m was wound in the form of a film-roll. In the polypropylene film of the present Example, the principal-axis direction of the film was a width direction of the film.

(Example 2)

To the polypropylene resin used in Example 1 in which a meso-pentad fraction was 0.98, a melting point was 167°C, and a melt flow rate (MFR) was 2.6 g/10 minutes, 0.4% by mass of a nonitol-based melt-type nucleating agent "NX-8000" manufactured by Milliken Chemical was added, and the resulting mixture was kneaded/extruded by an extruder set at 240°C, and the resulting strands were cooled with water to be formed into chips. These chips were supplied to an extruder set at 240°C, and melt-extruded in the form of a sheet through a T-shaped slit die, and the melt sheet was brought into close contact with a casting drum maintained at 30°C by application of electrostatic to be cooled and solidified, and thereby a non-stretched sheet was obtained. Subsequently, the sheet was gradually preheated to 140°C by a plurality of rolls, and maintained at 140°C and made to pass through rolls which were differentiated in a circumferential velocity, and thereby, the sheet was stretched by 5.4 times in a longitudinal direction. Subsequently, the film was introduced into a tenter, and stretched by 8 times in a width direction at a temperature of 160°C, and then the film was heat-treated at 130°C while relaxing by 7% in a width direction as a first step heat treatment and relaxation treatment, and further heat-treated at 141°C while grasping the film in a width direction with a clip as a second step heat treatment. Thereafter, the film underwent a cooling step at 100°C and was guided out of the tenter, and the clip at the end of the film was released, and the surface of the film (side of the surface in contact with the casting drum) was subjected to a corona discharge treatment at treating intensity of 25 W·min/m$^2$ in the atmosphere, and a film having a thickness of 2.9 $\mu$m was wound in the form of a film-roll. In the polypropylene film of the present Example, the principal-axis direction of the film was a width direction of the film.

(Example 3)

To a polypropylene resin formed by polymerization by a Ziegler-Natta catalyst in which a meso-pentad fraction was 0.97, a melting point was 164°C, and a melt flow rate (MFR) was 3.0 g/10 minutes, 0.1% by mass of a nonitol-based melt-type nucleating agent "NX-8000" manufactured by Milliken Chemical was added, and the resulting mixture was kneaded/extruded by an extruder set at 240°C, and the resulting strands were cooled with water to be formed into chips. These chips were supplied to an extruder set at 240°C, and melt-extruded in the form of a sheet through a T-shaped slit die, and the melt sheet was brought into close contact with a casting drum maintained at 30°C by application of electrostatic to be cooled and solidified, and thereby a non-stretched sheet was obtained. Then, the sheet was gradually preheated to 140°C by a plurality of rolls, maintained at 140°C and made to pass through rolls which were differentiated in a circumferential velocity, and thereby, the sheet was stretched by 5.2 times in a longitudinal direction. Subsequently, the film was introduced into a tenter, and stretched by 7.5 times in a width direction at a temperature of 160°C, and then the film was heat-treated at 129°C while relaxing by 9% in a width direction as a first step heat treatment and relaxation treatment, and further heat-treated at 142°C while grasping the film in a width direction with a clip as a second step heat treatment. Thereafter, the film underwent a cooling step at 100°C and was guided out of the tenter, and the clip at the end of the film was released, and the surface of the film (side of the surface in contact with the casting drum) was subjected to a corona discharge treatment at treating intensity of 25 W·min/m$^2$ in the atmosphere, and a film having a thickness of 3.0 $\mu$m was wound in the form of a film-roll. In the polypropylene film of the present Example, the principal-axis direction of the film was a width direction of the film.

(Example 4)- Reference Only

To the polypropylene resin used in Example 3 in which a meso-pentad fraction was 0.97, a melting point was 164°C, and a melt flow rate (MFR) was 3.0 g/10 minutes, 0.3% by mass of a nonitol-based melt-type nucleating agent "NX-8000" manufactured by Milliken Chemical was added, and the resulting mixture was kneaded/extruded by an extruder set at 240°C, and the resulting strands were cooled with water to be formed into chips. These chips were supplied to an extruder set at 240°C, and melt-extruded in the form of a sheet through a T-shaped slit die, and the melt sheet was brought into close contact with a casting drum maintained at 30°C by application of electrostatic to be cooled and solidified, and thereby a non-stretched sheet was obtained. Then, the sheet was gradually preheated to 140°C by a plurality of rolls, and maintained at 140°C and made to pass through rolls which were differentiated in a circumferential velocity, and thereby, the sheet was stretched by 5.8 times in a longitudinal direction. Subsequently, the film was introduced into a tenter, and stretched by 9.3 times in a width direction at a temperature of 160°C, and then the film was heat-treated at 165°C while relaxing by 8% in a width direction as a relaxation treatment. Thereafter, the film underwent a cooling step at 100°C and was guided out of the tenter, and the clip at the end of the film was released, and the surface of the film (side of the surface in contact with the casting drum) was subjected to a corona discharge treatment at treating intensity of 25 W·min/m$^2$ in the atmosphere, and a film having a thickness of 6.0 μm was wound in the form of a film-roll. In the polypropylene film of the present Example, the principal-axis direction of the film was a width direction of the film.

(Example 5)

With respect to 100 parts by mass of a linear polypropylene resin formed by polymerization by a Ziegler-Natta catalyst in which a meso-pentad fraction was 0.98, a melting point was 167°C, and a melt flow rate (MFR) was 2.6 g/10 minutes, the polypropylene resin and a nonitol-based melt-type nucleating agent "NX-8000" manufactured by Milliken Chemical were kneaded/extruded by an extruder set at 240°C so that a concentration of the nucleating agent was 0.3 part by mass, and the resulting strands were cooled with water to be formed into chips to thereby obtain a polypropylene resin material (B). The polypropylene resin material (B) was supplied to a single-screw melt extruder for a B-layer. As a polypropylene resin for an A-layer, in a polypropylene resin as a linear polypropylene manufactured by Prime Polymer Co., Ltd. in which a meso-pentad fraction was 0.98, a melting point was 167°C, and a melt flow rate (MFR) was 2.6 g/10 minutes, 1.0% by mass of a branched polypropylene resin manufactured by Basell AF (high melt tension polypropylene Profax PF-814) was blended, and the resulting mixture was supplied to a single-screw melt extruder for an A-layer, and melt-extruded at 240°C. After eliminating extraneous materials with a sintered filter for cutting 80 μm or larger, using a feed block, three-layer lamination of A-layer/B-layer/A-layer was formed by adjusting extrusion amount so that a ratio between thicknesses of layers was 1/8/1 (A ratio of the A-layer of the surface layer was 20%), and the melt laminated polymer was discharged in the form of a sheet through a T-shaped die and was brought into close contact with a casting drum maintained at 90°C by application of electrostatic to be cooled and solidified, and thereby a non-stretched sheet was obtained. Subsequently, the sheet was gradually preheated to 140°C by a plurality of rolls, and maintained at 140°C and made to pass through rolls which were differentiated in a circumferential velocity, and thereby, the sheet was stretched by 6 times in a longitudinal direction. Subsequently, the film was introduced into a tenter, and stretched by 10 times in a width direction at a temperature of 165°C, and then the film was heat-treated at 130°C while relaxing by 8% in a width direction as a first step heat treatment and relaxation treatment, and further heat-treated at 140°C while grasping the film in a width direction with a clip as a second step heat treatment. Thereafter, the film underwent a cooling step at 100°C and was guided out of the tenter, and the clip at the end of the film was released, and the surface of the film (side of the surface in contact with the casting drum) was subjected to a corona discharge treatment at treating intensity of 25 W·min/m$^2$ in the atmosphere, and a film having a thickness of 2.0 μm was wound in the form of a film-roll. In the polypropylene film of the present Example, the principal-axis direction of the film was a width direction of the film.

(Comparative Example 1)

To a polypropylene resin formed by polymerization by a single-site catalyst in which a meso-pentad fraction was 0.97, a melting point was 157°C, and a melt flow rate (MFR) was 3.5 g/10 minutes, 0.2% by mass of a nonitol-based melt-type nucleating agent "NX-8000" manufactured by Milliken Chemical was added, and the resulting mixture was kneaded/extruded by an extruder set at 240°C, and the resulting strands were cooled with water to be formed into chips. These chips were supplied to an extruder set at 240°C, and melt-extruded in the form of a sheet through a T-shaped slit die, and the melt sheet was brought into close contact with a casting drum maintained at 30°C by application of electrostatic to be cooled and solidified, and thereby a non-stretched sheet was obtained. Then, the sheet was gradually preheated to 140°C by a plurality of rolls, and maintained at 140°C and made to pass through rolls which were differentiated in a circumferential velocity, and thereby, the sheet was stretched by 5.0 times in a longitudinal direction. Subsequently, the film was introduced into a tenter, and stretched by 8 times in a width direction at a temperature of 160°C, and then the film was heat-treated at 165°C while relaxing by 10% in a width direction as a heat treatment and a relaxation treatment. Thereafter, the film underwent a cooling step at 100°C and was guided out of the tenter, and the clip at the end of the film was released, and the surface of the film (side of the surface in contact with the casting drum) was subjected to a corona discharge treatment at treating intensity of 25 W·min/m$^2$ in the atmosphere, and a film having a thickness of 3.1 μm was wound in the form of a film-roll. In the polypropylene film of the present Comparative Example, the principal-axis direction of the film was a width direction of the film.

(Comparative Example 2)

The polypropylene resin used in Example 1 in which a meso-pentad fraction was 0.98, a melting point was 167°C, and a melt flow rate (MFR) was 2.6 g/10 minutes, was supplied to an extruder at 260°C, and melt-extruded in the form of a sheet through a T-shaped slit die at a resin temperature of 260°C, and the melt sheet was brought into close contact with a casting drum maintained at 30°C by application of electrostatic to be cooled and solidified, and thereby a non-stretched sheet was obtained. Then, the sheet was gradually preheated to 140°C by a plurality of rolls, and maintained at 140°C and made to pass through rolls which were differentiated in a circumferential velocity, and thereby, the sheet was stretched by 4.3 times in a longitudinal direction. Subsequently, the film was introduced into a tenter, and stretched by 8 times in a width direction at a temperature of 160°C, and then the film was heat-treated at 132°C while relaxing by 10% in a width direction as a first step heat treatment and relaxation treatment, and further heat-treated at 142°C while grasping the film in a width direction with a clip as a second step heat treatment. Thereafter, the film underwent a cooling step at 100°C and was guided out of the tenter, and the clip at the end of the film was released, and the surface of the film (side of the surface in contact with the casting drum) was subjected to a corona discharge treatment at treating intensity of 25 W·min/m$^2$ in the atmosphere, and a film having a thickness of 3.2 m was wound in the form of a film-roll. In the polypropylene film of the present Comparative Example, the principal-axis direction of the film was a width direction of the film.

(Comparative Example 3)

To the polypropylene resin used in Example 1 in which a meso-pentad fraction was 0.98, a melting point was 167°C, and a melt flow rate (MFR) was 2.6 g/10 minutes, 0.2% by mass of a phosphate-based non-melt-type nucleating agent "ADEKASTAB (registered trademark) NA-21" manufactured by ADEKA CORPORATION was added, and the resulting mixture was kneaded/extruded by an extruder set at 240°C, and the resulting strands were cooled with water to be formed into chips. These chips were supplied to an extruder set at 240°C, and melt-extruded in the form of a sheet through a T-shaped slit die, and the melt sheet was brought into close contact with a casting drum maintained at 30°C by application of electrostatic to be cooled and solidified, and thereby a non-stretched sheet was obtained. Subsequently, the sheet was gradually preheated to 140°C by a plurality of rolls, maintained at 140°C and made to pass through rolls which were differentiated in a circumferential velocity, and thereby, the sheet was stretched by 5.4 times in a longitudinal direction. Subsequently, the film was introduced into a tenter, and stretched by 9.1 times in a width direction at a temperature of 160°C, and then the film was heat-treated at 131°C while relaxing by 2% in a width direction as a first step heat treatment and relaxation treatment, and further heat-treated at 140°C while grasping the film in a width direction with a clip as a second step heat treatment. Thereafter, the film underwent a cooling step at 100°C and was guided out of the tenter, and the clip at the end of the film was released, and the surface of the film (side of the surface in contact with the casting drum) was subjected to a corona discharge treatment at treating intensity of 25 W·min/m$^2$ in the atmosphere, and a film having a thickness of 3.0 $\mu$m was wound in the form of a film-roll. In the polypropylene film of the present Comparative Example, the principal-axis direction of the film was a width direction of the film.

(Comparative Example 4)

With respect to 100 parts by mass of a polypropylene resin formed by polymerization by a single-site catalyst in which a meso-pentad fraction was 0.97, a melting point was 157°C, and a melt flow rate (MFR) was 3.5 g/10 minutes, the polypropylene resin and a nonitol-based melt-type nucleating agent "NX-8000" manufactured by Milliken Chemical were kneaded/extruded by an extruder set at 240°C so that a concentration of the nucleating agent was 0.2 parts by mass, and the resulting strands were cooled with water to be formed into chips to thereby obtain a polypropylene resin (C). A polypropylene film having a thickness of 2.0 $\mu$m was prepared in the same manner as in Example 5 except for using the polypropylene resin (C) in place of the polypropylene resin (B).

(Comparative Example 5)

With respect to 100 parts by mass of a linear polypropylene resin formed by polymerization by a Ziegler-Natta catalyst in which a meso-pentad fraction was 0.94, a melting point was 163°C, and a melt flow rate (MFR) was 3.0 g/10 minutes, the polypropylene resin and a nonitol-based melt-type nucleating agent "NX-8000" manufactured by Milliken Chemical were kneaded/extruded by an extruder set at 240°C so that a concentration of the nucleating agent was 0.2 parts by mass, and the resulting strands were cooled with water to be formed into chips to thereby obtain a polypropylene resin (D). A polypropylene film having a thickness of 2.3 $\mu$m was prepared in the same manner as in Example 5 except for using the polypropylene resin (D) in place of the polypropylene resin (B) .

Production conditions of Examples and Comparative Examples, and properties of the obtained films are shown in Table 1 and Table 2.

[Table 1]

|  |  | Example 1 | Example 2 | Example 3 | Example 4 | Example 5 |
|---|---|---|---|---|---|---|
| Meso-Pentad Fraction | - | 0.98 | 0.98 | 0.97 | 0.97 | 0.98 |

(continued)

|  |  | Example 1 | Example 2 | Example 3 | Example 4 | Example 5 |
|---|---|---|---|---|---|---|
| Melting Point of Polypropylene Resin | °C | 167 | 167 | 164 | 164 | 167 |
| Presence or Absence of Content of Melt-Type Nucleating Agent | - | present | present | present | present | present |
| Type of Nucleating Agent | - | nonitol base | nonitol base | nonitol base | nonitol base | nonitol base |
| Concentration of Nucleating Agent | % | 0.3 | 0.4 | 0.1 | 0.3 | 0.3 |
| Lamination Configuration | - | single layer | single layer | single layer | single layer | A/B/A |
| Lengthwise Stretching Magnification | times | 6.0 | 5.4 | 5.2 | 5.8 | 6.0 |
| Crosswise Stretching Magnification | times | 10.0 | 8.0 | 7.5 | 9.3 | 10.0 |
| First Stage Heat Treatment Temperature | °C | 130 | 130 | 129 | 165 | 130 |
| Second Stage Heat Treatment Temperature | °C | 140 | 141 | 142 | - | 140 |
| Relaxation Rate | % | 10 | 7 | 9 | 8 | 8 |
| Film Thickness | μm | 2.8 | 2.9 | 3.0 | 6.0 | 2.0 |
| Crystallization Temperature | °C | 133 | 134 | 131 | 132 | 133 |
| Breaking Strength in Principal-Axis Direction at 125°C + Breaking Strength in Direction Orthogonal to Principal-Axis at 125°C | MPa | 350 | 310 | 275 | 256 | 348 |
| Breaking Strength in Direction Orthogonal to Principal-Axis at 125°C | MPa | 153 | 117 | 104 | 78 | 148 |
| F5 value in Direction Orthogonal to Principal-Axis at 125°C | MPa | 11.3 | 9.7 | 8.8 | 7.7 | 11.1 |
| Heat Shrinkage Percentage in Principal-Axis Direction at 125°C for 15 minutes | % | 0.1 | 0.3 | 0.2 | 0.4 | 0.2 |
| Fm/Sm | - | 150 | 140 | 125 | 134 | 145 |
| Breakdown Voltage of Film at 125°C | V/μm | 571 | 548 | 512 | 505 | 565 |
| Insulation Defect | - | S | S | A | S | S |
| Capacitor Characteristics at 110°C | Voltage Resistance | S | S | A | A | S |
|  | Reliability | S | A | S | A | S |
| Device processability | - | B | B | B | B | A |

[Table 2]

|  |  | Comparative Example | Comparative Example 2 | Comparative Example 3 | Comparative Example 4 | Comparative Example 5 |
|---|---|---|---|---|---|---|
| Meso-Pentad Fraction |  | 0.97 | 0.98 | 0.98 | 0.97 | 0.94 |

(continued)

| | | Comparative Example | Comparative Example 2 | Comparative Example 3 | Comparative Example 4 | Comparative Example 5 |
|---|---|---|---|---|---|---|
| Melting Point of Polypropylene Resin | °C | 157 | 167 | 167 | 157 | 163 |
| Presence or Absence of Content of Melt-Type Nucleating Agent | - | present | none | none | present | present |
| Type of Nucleating Agent | - | nonitol base | - | Non-Melt Type | nonitol base | nonitol base |
| Concentration of Nucleating Agent | % | 0.2 | - | 0.2 | 0.2 | 0.2 |
| Lamination Configuration | - | single layer | single layer | single layer | A/C/A | A/D/A |
| Lengthwise Stretching Magnification | times | 5.0 | 4.3 | 5.4 | 6.0 | 6.0 |
| Crosswise Stretching Magnification | times | 8.0 | 8.0 | 9.1 | 10.0 | 10.0 |
| First Stage Heat Treatment Temperature | °C | 165 | 132 | 131 | 130 | 130 |
| Second Stage Heat Treatment Temperature | °C | - | 142 | 140 | 140 | 140 |
| Relaxation Rate | % | 10 | 10 | 2 | 8 | 8 |
| Film Thickness | μm | 3.1 | 3.2 | 3.0 | 2.0 | 2.3 |
| Crystallization Temperature | °C | 132 | 109 | 128 | 133 | 131 |
| Breaking Strength in Principal-Axis Direction at 125°C + Breaking Strength in Direction Orthogonal to Principal-Axis at 125°C | MPa | 227 | 218 | 241 | 218 | 207 |

(continued)

|  | | Comparative Example | Comparative Example 2 | Comparative Example 3 | Comparative Example 4 | Comparative Example 5 |
|---|---|---|---|---|---|---|
| Breaking Strength in Direction Orthogonal to Principal-Axis at 125°C | MPa | 77 | 70 | 76 | 74 | 68 |
| F5 value in Direction Orthogonal to Principal-Axis at 125°C | MPa | 6.9 | 7.1 | 7.2 | 6.7 | 6.1 |
| Heat Shrinkage Percentage in Principal-Axis Direction at 125°C for 15 minutes | % | 0.6 | 0.3 | 1.6 | 0.5 | 0.9 |
| Fm/Sm | - | 96 | 89 | 91 | 92 | 84 |
| Breakdown Voltage of Film at 125 °C | V/μm | 488 | 481 | 497 | 485 | 415 |
| Insulation Defect | - | B | B | B | B | C |
| Capacitor Characteristics at 110°C | Voltage Resistance | B | B | B | B | C |
| | Reliability | C | B | C | B | C |
| Device processability | - | B | A | B | A | A |

**Claims**

1. A polypropylene film in which the sum of a breaking strength thereof in a principal-axis direction of the film measured at 125°C and a breaking strength in a direction orthogonal to the principal axis of the film, measured as described in the specification, is 250 MPa or greater, the breaking strength in the direction orthogonal to the principal axis of the film measured at 125°C is 80 MPa or greater, and a heat shrinkage percentage in a heating treatment at 125°C for 15 minutes in the principal-axis direction of the film, when measured as described in the specification, is 1% or less.

2. The polypropylene film according to claim 1, wherein stress at 5% elongation (F5 value) in the direction orthogonal to the principal axis of the film, measured at 125°C as described in the specification, is 8 MPa or greater.

3. The polypropylene film according to claim 1 or 2, wherein when the breaking strength in the direction orthogonal to the principal axis of the film measured at 23°C as described in the specification is denoted by Fm (MPa), and a heat shrinkage percentage in a heating treatment at 125°C for 15 minutes in the direction orthogonal to the principal axis of the film is denoted by Sm (%), the Fm and the Sm satisfy the following formula (1):

$$Fm/Sm \geq 100 \quad \cdots \quad (1)$$

4. The polypropylene film according to any one of claims 1 to 3, containing a polypropylene resin in which a meso-pentad fraction is 0.95 or more and a melting point exceeds 160°C, when measured as described in the specification, and a melt-type nucleating agent for the resin.

5. The polypropylene film according to claim 4, wherein the melt-type nucleating agent is a nucleating agent selected from a nonitol-based nucleating agent or triamide derivative-based compounds.

6. The polypropylene film according to any one of claims 1 to 5, wherein a crystallization peak temperature which can be observed in a cooling process from a melt state by a differential scanning calorimeter, as described in the specification, exceeds 125°C.

7. The polypropylene film according to any one of claims 1 to 6, having a configuration formed by laminating two or more layers in a thickness direction.

8. The polypropylene film according to any one of claims 1 to 7, wherein two or more layers are laminated in a thickness direction and a layer not containing a melt-type nucleating agent is arranged at least on one surface.

9. A metal film-laminated film formed by disposing a metal film on at least one surface of the polypropylene film according to any one of claims 1 to 8.

10. A film capacitor formed by using the metal film-laminated film according to claim 9.

**Patentansprüche**

1. Polypropylenfolie, in der die Summe aus der bei 125 °C gemessenen Reißfestigkeit in Hauptachsenrichtung der Folie und der Reißfestigkeit in zur Hauptachse der Folie orthogonaler Richtung, jeweils wie in der Beschreibung erläutert gemessen, 250 MPa oder mehr beträgt, die bei 125 °C in zur Hauptachse der Folie orthogonaler Richtung gemessene Reißfestigkeit 80 MPa oder mehr beträgt und die wie in der Beschreibung erläutert gemessene prozentuelle Wärmeschrumpfung während einer 15-minütigen Wärmebehandlung bei 125 °C in Hauptachsenrichtung der Folie 1 % oder weniger beträgt.

2. Polypropylenfolie nach Anspruch 1, wobei die wie in der Beschreibung erläutert bei 125 °C gemessene Spannung bei 5 % Dehnung (F5-Wert) in zur Hauptachse der Folie orthogonaler Richtung 8 MPa oder mehr beträgt.

3. Polypropylenfolie nach Anspruch 1 oder 2, wobei, wenn die wie in der Beschreibung erläutert bei 23 °C gemessene Reißfestigkeit in zur Hauptachse der Folie orthogonaler Richtung als Fm (MPa) bezeichnet wird und die prozentuelle Wärmeschrumpfung während einer 15-minütigen Wärmebehandlung bei 125 °C in zur Hauptachse der Folie orthogonaler Richtung als Sm (%) bezeichnet wird, Fm und Sm der folgenden Formel (1) genügen:

$$Fm/Sm \geq 100 \ . \ . \ . \ . \ (1).$$

4. Polypropylenfolie nach einem der Ansprüche 1 bis 3, die ein Polypropylenharz, in dem der Mesopentaden-Anteil 0,95 oder mehr beträgt und dessen Schmelzpunkt über 160 °C liegt, jeweils wie in der Beschreibung erläutert gemessen, sowie einen Keimbildner vom Schmelztyp für das Harz enthält.

5. Polypropylenfolie nach Anspruch 4, wobei der Keimbildner vom Schmelztyp ein Keimbildner ist, der aus einem Keimbildner auf Nonitol-Basis und Verbindungen auf Triamidderivat-Basis ausgewählt ist.

6. Polypropylenfolie nach einem der Ansprüche 1 bis 5, wobei die Kristallisationspeak-Temperatur, die wie in der Beschreibung erläutert mittels eines Differentialscanningkalorimeters während eines Kühlvorgangs aus dem geschmolzenen Zustand beobachtbar ist, über 125 °C liegt.

7. Polypropylenfolie nach einem der Ansprüche 1 bis 6, die eine durch Laminieren von zwei oder mehr Schichten in Dickenrichtung gebildete Konfiguration aufweist.

8. Polypropylenfolie nach einem der Ansprüche 1 bis 7, in der zwei oder mehr Schichten in Dickenrichtung laminiert sind und eine Schicht, die keinen Keimbildner vom Schmelztyp enthält, auf zumindest einer Oberfläche angeordnet ist.

**9.** Metallfilm-Laminatfolie, die durch Aufbringen eines Metallfilms auf zumindest eine Oberfläche einer Polypropylenfolie nach einem der Ansprüche 1 bis 8 gebildet ist.

**10.** Folienkondensator, der unter Verwendung einer Metallfilm-Laminatfolie nach Anspruch 9 gebildet ist.


**Revendications**

**1.** Film de polypropylène dans lequel la somme d'une résistance à la rupture de celui-ci dans une direction d'axe principal du film mesurée à 125°C et d'une résistance à la rupture dans une direction orthogonale à l'axe principal du film, mesurée comme décrit dans la description, est de 250 MPa ou plus, la résistance à la rupture dans la direction orthogonale à l'axe principal du film mesurée à 125°C est de 80 MPa ou plus, et un pourcentage de retrait thermique lors d'un traitement thermique à 125°C pendant 15 minutes dans la direction de l'axe principal du film, mesuré comme décrit dans la description, est de 1 % ou moins.

**2.** Film de polypropylène selon la revendication 1, dans lequel une contrainte à 5 % d'allongement (valeur F5) dans la direction orthogonale à l'axe principal du film, mesurée à 125°C comme décrit dans la description, est de 8 MPa ou plus.

**3.** Film de polypropylène selon la revendication 1 ou 2, dans lequel lorsque la résistance à la rupture dans la direction orthogonale à l'axe principal du film mesurée à 23°C comme décrit dans la description est indiquée par Fm (MPa), et un pourcentage de retrait thermique dans un traitement thermique à 125°C pendant 15 minutes dans la direction orthogonale à l'axe principal du film est indiqué par Sm (%), Fm et Sm satisfont à la formule (1) suivante :

$$Fm/Sm \geq 100 \quad \cdots \quad (1).$$

**4.** Film de polypropylène selon l'une quelconque des revendications 1 à 3, contenant une résine de polypropylène dans laquelle une fraction de mésopentade est de 0,95 ou plus et un point de fusion dépasse 160°C, lorsqu'il est mesuré comme décrit dans la description, et un agent de nucléation de type fondu pour la résine.

**5.** Film de polypropylène selon la revendication 4, dans lequel l'agent de nucléation de type fondu est un agent de nucléation choisi parmi un agent de nucléation à base de nonitol ou des composés à base de dérivé de triamide.

**6.** Film de polypropylène selon l'une quelconque des revendications 1 à 5, dans lequel une température de pic de cristallisation qui peut être observée dans un processus de refroidissement à partir d'un état fondu par un calorimètre à balayage différentiel, comme décrit dans la description, dépasse 125°C.

**7.** Film de polypropylène selon l'une quelconque des revendications 1 à 6, ayant une configuration formée en stratifiant deux couches ou plus dans une direction d'épaisseur.

**8.** Film de polypropylène selon l'une quelconque des revendications 1 à 7, dans lequel deux couches ou plus sont stratifiées dans une direction d'épaisseur et une couche ne contenant pas d'agent de nucléation de type fondu est disposée au moins sur une surface.

**9.** Film métallique-film stratifié formé en disposant un film métallique sur au moins une surface du film de polypropylène selon l'une quelconque des revendications 1 à 8.

**10.** Condensateur à film formé en utilisant le film métallique-film stratifié selon la revendication 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08300470 A
- JP 2004161799 A
- JP S58134714 A

- JP S6088049 A
- JP 2013538258 W
- EP 2684676 A

**Non-patent literature cited in the description**

- *Nikkei Electronics,* 17 September 2012, 57-62

- **M. FUJIYAMA.** *Journal of Applied Polymer Science,* 1988, vol. 36, 985-1948